# EUROPEAN PATENT SPECIFICATION

(11) **EP 3 512 623 B1**
(45) Date of publication and mention of the grant of the patent: **28.07.2021**
(21) Application number: 17851694.4
(22) Date of filing: 18.09.2017
(51) Int. Cl.: B01F 15/02, B01F 15/00, B01F 5/06, B01F 3/04, G05D 16/00, G05D 16/20, B01F 15/04, B67D 1/00

(54) **INLINE GAS/LIQUID INFUSION SYSTEM WITH ADJUSTABLE ABSORPTION OUTPUT AND SELF-TUNING CAPACITY**
INLINE GAS-/FLÜSSIGKEITSINFUSIONSSYSTEM MIT EINSTELLBARER ABSORPTIONSLEISTUNG UND SELBSTEINSTELLENDER KAPAZITÄT
SYSTÈME D'INFUSION DE GAZ/LIQUIDE EN LIGNE À SORTIE D'ABSORPTION RÉGLABLE ET À CAPACITÉ D'AUTORÉGLAGE

(30) Priority: 16.09.2016 US 201662395566 P
(43) Date of publication of application: 24.07.2019
(73) Proprietor: Flow Control LLC., Beverly, Massachusetts 01915 (US)
(72) Inventor: PERKINS, Bernard L., Orange, California 92869 (US); ESTRADA, Jesus, Gloucester, Massachusetts 01930 (US)
(74) Representative: Wörz, Volker Alfred
(86) International application number: PCT/US2017/052003
(87) International publication number: WO 2018/053394

(56) References cited:
- KR-A- 20100 060 219
- US-A- 4 850 269
- US-A1- 2012 177 784
- US-A1- 2013 108 760
- US-A1- 2013 208 561
- US-A1- 2015 023 127
- US-A1- 2015 151 258
- US-A1- 2016 222 332
- US-A1- 2016 304 820

## Description

### CROSS-REFERENCE TO RELATED APPLICATIONS

This application claims benefit to provisional patent application serial no. 62/395,566, filed 16 September 2016.

### BACKGROUND OF THE INVENTION

### 1. Field of Invention

The present invention relates to a gas/liquid infusion system for providing a beverage.

### 2. Description of Related Art

Theory of operation: The standard beverage water carbonator is a device designed to dissolve carbon dioxide gas (CO₂) in water, producing carbonated water. CO2 gas is delivered through a regulator to the carbonator tank gas inlet fitting. Simultaneously, plain water is pumped into the tank by the vane pump which is fed from a commercial water source. The CO₂ gas, under pressure, dissolves in the water and the result is carbonated water. Some systems include chilling the water before, during, and/or after passing through the carbonator. When the liquid level of carbonated water reaches the liquid level sensing device (inside the tank) upper position probe, the switch opens the circuit and the pump motor turns off. As carbonated water is drawn from the tank, the level of carbonated water will drop. At a certain point, the liquid level switch recognizes the drop in the level and closes the circuit to turn on the pump motor which replenishes the amount of carbonated water that has been taken out of the tank. The output carbonation level produced is constant based on the temperature and pressure conditions of the system.

In typical Soda Beverage Carbonation applications, the liquid inlet pressure to the Carbonator is subject to fluctuations in incoming liquid pressure based on water usage variations in the facility that occurs during the day. It is not possible to maintain the set point or adjust the set point due to the unpredictable nature of the incoming water supply pressure and flow characteristics.

By way of example, see Inline Carbonator Devices, such as that disclosed in U.S. Patent No. 9,033,315 B2, which is assigned to the assignee of the present invention. This device, and similar inline devices, enable mixing of liquid and gas in a flow through an inline mixing chamber as contrasted with the accumulator tank in the first example. The principles of operation are similar to the standard carbonator system, but there is no reservoir tank so the Carbonation of the liquid must happen on demand. The differential pressure between the input gas and liquid streams determines the level of gas absorbed into the liquid at a given temperature. There are different models on the market citing different advantages and performance characteristics, but they do not have the ability to adjust or maintain the set point target in real-time.

The following is a description of some of the shortcomings of the above mentioned devices:
In typical Soda Beverage Carbonator Systems in the market today, the output water carbonation level produced is constant based on the temperature and pressure conditions of the gas liquid system. It is not possible for the end user to adjust carbonation output level of the system either preset or real-time for achieving various desirable end beverage quality characteristics. Additionally, the present systems in the market place lack that ability for real time compensation for typical expected fluctuations in the incoming liquid and gas pressures. This capability is essential for maintaining target carbonation levels in the presence of unpredictable fluctuations in incoming liquid pressure based on water usage variations throughout the facility that occur during the day.

In the Nitrogen Infusion applications such as Nitrogenized Cold Brewed Coffee or tea, the use of a traditional Tank carbonator system for nitrogen infusion cannot achieve consistent output levels due to the variability in the liquid pressure. The flow and pressure of the liquid to and from the accumulator tank can vary from 20 to 120 PSI (= 1,38 to 8,27 bar) when the liquid level in the tank is being replenished; this creates variable flow rate output from the system during dispense and variable nitrogen infusion levels from drink to drink. Furthermore, the accumulator tank does not lend itself to clean in place requirements when used with premixed beverages and can lead to sanitation issues vs. an Inline Infusion Device. These issues and challenges make the use of an inline gas absorption device desirable over existing carbonators with a tank. The challenge with using inline carbonators for this purpose is that the differential pressure required for "inline" nitrogen gas absorption into the liquid is very low; approximately in the range of 0.5 to 3 psi (= 0,035 to 0,21 bar) differential between incoming gas and liquid under typical system dispenses conditions. This low differential pressure requirement on an inline device poses a big problem because standard regulators and gauges in use in beverage systems today do not have sufficient resolution to adjust the regulator increments fine enough to properly and reliably adjust the set point value. In addition, minor system fluctuations can throw the device out of range of infusion and create non-infused, or largely over infused final drinks. Minor changes can have a big impact on the end drink quality. This prevents the use of existing inline nitrogenizing without the technology presented in this invention.

Challenges for use in Beer Dispense carbonation and/or nitrogen infusion are also based on the variation in incoming liquid pressure to carbonation device, and the complexity of dispense plumbing systems for which a constant flow must be tuned. The pressure to the carbonation device in beer systems is typically a Keg, Cask, or other pressurized vessel requiring gas pressure setting. The keg (vessel) pressure setting in beer dispense varies based primarily on the following:
- The gas input pressure required to achieve the desired liquid output flow rate through the various plumbing systems including tubing, fittings, chiller cold plates in end installations.
- The keg pressure setting required by differing beer styles in order to achieve the desired carbonation level or nitrogen level in the beer residing in the keg (vessel).
- The Keg pressure settings are also adjusted based on the type of gas being used for infusion and dispense, typically Nitrogen is blended with CO₂ to allow high pressure to be applied for long distance draft systems without creating over carbonation and foaming from high pressure CO₂ alone.

The following are shortcomings of standard beverage dispenser carbonator device (vane pump coupled with a tank):
- The Carbonation level of the liquid output is not user adjustable or real time adjustable
- They are not "self-tuning" and cannot compensate for variation in incoming Liquid or Gas Input Pressures and still maintain target carbonation levels.
- Requires a Tank, and is not Inline type which can be easily cleaned in place
- The tank design is not favorable for Beverages such as soda, coffee, teas, beer, milk based, which require clean in place functionality.
- Footprint and size is larger than the Inline Device

The following are shortcomings of available Inline Carbonator Devices:
- The Carbonation level of the liquid output is not adjustable in real time by means of varying liquid input pressure and flow conditions.
- They cannot compensate for variation in incoming Liquid or Gas Input Pressures and maintain target carbonation levels.

US 2012/ 177 784 A1 describes a plurality of different embodiments of inline gas infusion systems. Further embodiments of inline gas infusion systems are known from KR 2010 0060 219 A1.

In view of this, there is a need in the industry for a better way to carbonate beverages that overcomes the shortcomings of the known beverage carbonation devices.

### SUMMARY OF THE INVENTION

In summary, the following is a description of how the present invention overcomes the above mentioned difficulties:
The amount of absorption of gas into liquid is a function of the temperature and pressure at which the gas and liquid input streams are being combined. For Inline Carbonator devices the differential pressure between the Gas and Liquid input streams is the critical control parameter for controlling the level of Gas Absorbed into the Liquid at various temperatures. The present invention (Inline variable Gas/Liquid Absorption system) is able to provide real time adjustable set point output levels of gas absorption by monitoring the input pressures and adjusting the liquid input pressure with an electronic controller that executes a control algorithm on the pump and/or other system components. The pump in turn manipulates the pressure of the incoming liquid stream in a way that provides a stable and real-time adjustable inlet pressure to the Inline Gas Liquid Absorption device. This is unlike any traditional carbonating (or other gas/liquid absorbing) devices on the market today.

Additionally, the system is also able to maintain a consistent target value of gas absorption into liquid in the presence of "inconsistent or variable" incoming system liquid or gas pressures. This novel capability is essential for achieving preset or real-time adjustable gas infusion levels, and maintaining the target set point in the presence of variability in input pressures which are common in standard applications in the market today:
The present invention overcomes these application challenges/limitations through the use of pressure sensing devices and a controller with a control algorithm capable of making very precise incremental changes to the pump performance, thereby enabling precise micro adjustments to the differential pressure value for the end goal of precisely maintaining the set point value in the presence of system fluctuations, as well as enabling real time set point manipulation for customizing finished drink characteristics such as carbonation level, nitrogen level, acidity, flavor, mouth-feel, creaminess smoothness, etc.).

### Specific Embodiments

According to some embodiments, and by way of example, the present invention may include, or take the form of, a new and unique inline gas/liquid infusion system featuring an inline gas liquid absorption device, a pump for providing incoming liquid to the inline gas liquid absorption device, a liquid pressure sensing device configured to sense a liquid pressure of the incoming liquid, a gas pressure sensing device configured to sense a gas pressure of an incoming gas provided to the inline gas liquid absorption device, and an electronic control logic and subsystem having a signal processor configured to:
receive from the liquid pressure sensing device signaling containing information about a liquid pressure of the incoming liquid provided from the pump to the inline gas liquid absorption device and receive from the gas pressure sensing device signaling containing information about a gas pressure of the incoming gas provided to the inline gas liquid absorption device; and
determine corresponding signaling containing information to control the liquid pressure of the incoming liquid provided from the pump to the inline gas liquid absorption device based upon the signaling received from the liquid pressure sensing device and from the gas pressure sensing device; and control the pump based on the determined corresponding signaling in order to provide real time adjustable set point output levels of gas absorption in the inline gas liquid absorption device,
wherein the signaling received contains information about the liquid pressure sensed and the gas pressure sensed; and the signal processor is configured to determine the real time adjustable set point output levels of the gas absorption by monitoring the signaling received and adjusting the liquid pressure of the incoming liquid provided from the pump to the inline gas liquid absorption device based upon a differential pressure between the liquid pressure sensed and the gas pressure sensed.

By way of example, the system may also include one or more of the following features:
The signal processor may be configured to provide the corresponding signaling as output signals to the pump to adjust the liquid pressure of the incoming liquid provided from the pump to the inline gas liquid absorption device, including by varying characteristics of a voltage signal output to the pump.

The inline gas/liquid infusion system may include the pump configured to:
receive the corresponding signaling provided as output signaling from the signal processor, and also receive the incoming liquid; and
pump the incoming liquid, based upon the output signaling received, including where the pump is a motor driven pump.

The inline gas/liquid infusion system may include the inline gas liquid absorption device configured to:
receive the liquid pressure of the incoming liquid provided from the pump, and the gas pressure of the incoming gas provided from a pressurized gas tank, and
provide a gas infused liquid, including providing the gas infused liquid to a dispenser system or valve.

The signaling may include liquid pressure input signals, e.g. received from a liquid pressure sensing device configured to sense the liquid pressure of the incoming liquid provided from the pump, and provide the liquid pressure input signals containing information about the liquid pressure of the incoming liquid provided from the pump.

The inline gas/liquid infusion system may include the liquid pressure sensing device.

The signaling may include gas pressure input signals, e.g. received from a gas pressure sensing device configured to sense the gas pressure of the incoming gas provided from a pressurized gas tank to the inline gas liquid absorption device, and provide gas pressure input signals containing information about the gas pressure of the incoming gas provided from the pressurized gas tank to the inline gas liquid absorption device.

The inline gas/liquid infusion system may include the gas pressure sensing device.

The pressurized gas tank may be configured to provide CO₂ or nitrogen. The inline gas liquid absorption device may include, or take the form of, a mixing valve, a carbonator, a nitrogenator or an infuser.

The pump may include, or take the form of, a diaphragm, gear, lobe, flexible impeller, vane or centrifugal pump.

The corresponding signaling may control the pump so as to provide adjusted flow and pressure conditions of the incoming liquid provided to the inline gas liquid absorption device.

The signaling may include at least one feedback signal, e.g., that contains the information about the sensed liquid pressure of the incoming liquid provided from the pump to the inline gas liquid absorption device.

According to some embodiments, the present invention may also take the form of a method for an inline gas/liquid infusion in an inline gas/liquid infusion system, e.g., having steps for
receiving, with a signal processor, signaling containing information about a liquid pressure of an incoming liquid provided from a pump of the inline gas/liquid infusion system to an inline gas liquid absorption device of the inline gas/liquid infusion system and about a gas pressure of an incoming gas provided to the inline gas liquid absorption device; and
determining, with the signal processor, corresponding signaling containing information to control the liquid pressure of the incoming liquid provided from the pump to the inline gas liquid absorption device based upon the signaling received; and
controlling the pump based on the determined corresponding signaling in order to provide real time adjustable set point output levels of gas absorption in the inline gas liquid absorption device,
wherein the signaling containing information about the liquid pressure and the signaling containing information about the gas pressure are sensed by means of pressure sensing devices of the inline gas/liquid infusion system; and
the method further comprises determining, with the signal processor, the real time adjustable set point output levels of the gas absorption by monitoring the signaling received and adjusting the liquid pressure of the incoming liquid provided from the pump to the inline gas liquid absorption device based upon a differential pressure between the liquid pressure sensed and the gas pressure sensed.

The method may also include one or more of the features set forth herein, e.g., including providing the corresponding signaling as control signaling to the pump.

### BRIEF DESCRIPTION OF THE DRAWING

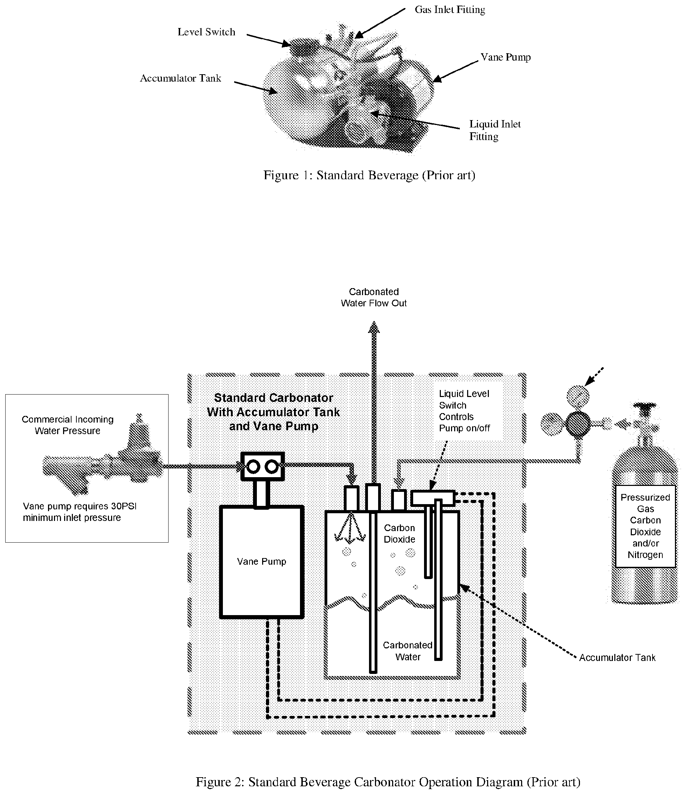

The drawing includes Figures 1-6, which are not necessarily drawn to scale, which are briefly described as follows:
Figure 1 shows a standard beverage carbonator that is known in the art.
Figure 2 shows a standard beverage carbonator operation diagram that is known in the art.
Figure 3 shows an inline gas liquid infusion system with an adjustable absorption level, according to some embodiments of the present invention.
Figure 4 shows an example of an application having the inline gas liquid infusion system shown in Figure 3 with an adjustable output, self-tuning application, and also having a single dispenser valve, e.g., for dispensing a nitrogen and/or CO₂ infused coffee, tea, latte, or other drinks, according to some embodiments of the present invention.
Figure 5 shows an example of an application having the inline gas liquid infusion system shown in Figure 3 with an adjustable output, self-tuning application, and also having a single or multiple dispenser valve, e.g., for dispensing a water carbonation to/for beverages like soda, according to some embodiments of the present invention.
Figure 6 shows an electronic control logic subsystem having a signal processor, according to some embodiments of the present invention.

Not every element or arrow in every Figure is labeled with a lead line and reference numeral/label, so as to reduce clutter in the drawing.

### DETAILED DESCRIPTION OF BEST MODE OF THE INVENTION

The following is a specific description of the operation of the present invention, mentioning all of the components and functions thereof:

### Figure 3:

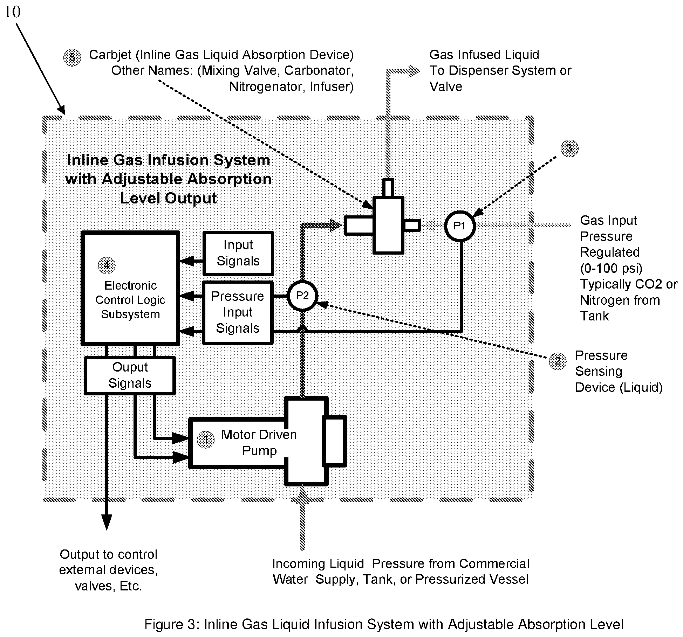

In summary, the present invention provides an Adjustable Inline Gas Infusion System, generally indicated as 10, that operates by infusing gas into a liquid or beverage to a desired amount or end products dispense gasification characteristic level as illustrated in Figure 3. Examples of descriptive gasification levels include: fizzy, foamy, gassy, bubbly, etc.

The adjustable Inline Gas Infusion system 10 consists of the following system elements:
1) Motor Driven Pump 1,
2) Liquid Pressure Sensing Device 2,
3) Gas Pressure Sensing Device 3,
4) Electronic Control Subsystem 4, and
5) Inline Liquid/Gas Absorption Device 5.

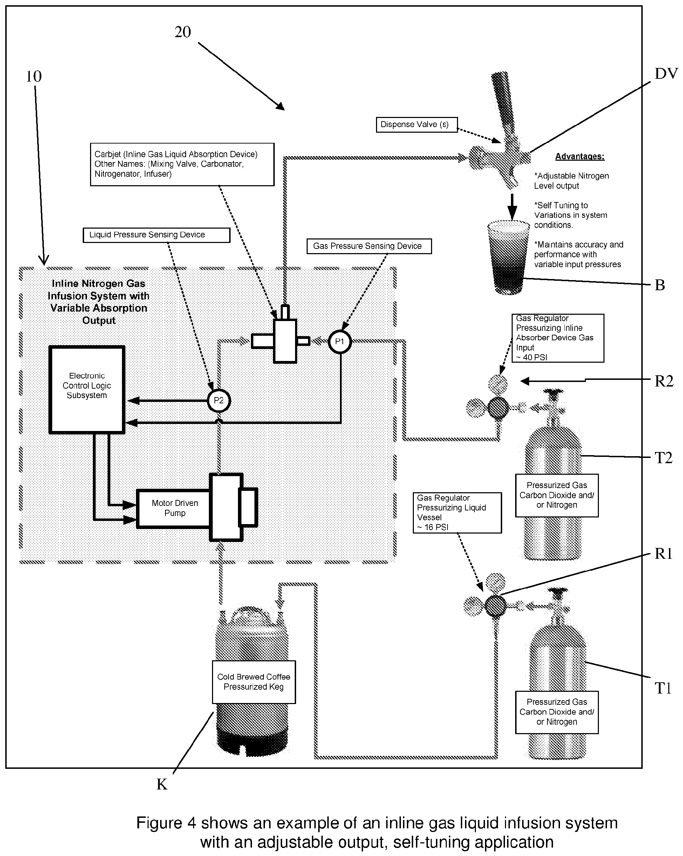

In Figure 3, the electronic control logic subsystem 4 is also known herein as a "controller"), and the inline gas liquid absorption device 5 is also known herein as a carbjet. Figure 3 also shows pressure input signals provided from the liquid pressure sensing device 2 and the gas pressure sensing device 3 to the electronic control logic subsystem 4, and output signals provided from the electronic control logic subsystem 4 to the motor driven pump 1. In addition, Figure 3 shows that the electronic control logic subsystem 4 receives input signals, and that the output signals from the electronic control logic subsystem 4 are also provided as an output to control external devices, valves, etc. Figure 3 shows that the motor driven pump 1 receives incoming liquid pressure, e.g., from a commercial water supply, tank or pressurized vessel; that the gas pressure sensing device 3 receives and senses gas input pressure regulated (e.g., 0-100 PSI = 0-6,9 bar) from a tank, which may typically take the form of CO₂ or nitrogen; and that the carbjet 5 receives pumped incoming liquid from the motor driven pump 1 and pressurized gas from the tank (see Figs. 4-5), and provides a gas infused liquid to a dispensing system or valve, e.g., like that shown in relation to Figures 4-5.

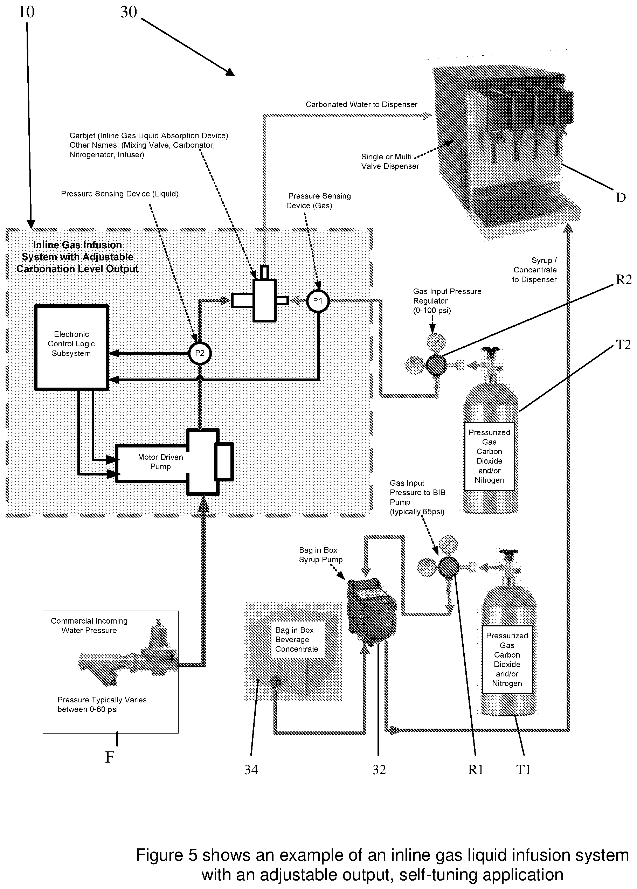

The incoming liquid stream pressure and flow that is provided to the inline gas infusion system 10 varies by application as is illustrated in Figure 3. For typical beverage soft drink carbonation applications, the water is provided from the restaurant or store's commercial building water system, e.g., as shown in Figure 5. For Beer, Coffee, Teas and other beverages, the incoming liquid may be provided from a Keg or other pressurized vessel, a bag in box, non-pressurized cask, bucket, or any other liquid containing vessel, e.g., as shown in Figures 4 and 5. Based on these applications, the incoming liquid pressure received by the motor driven pump 1 may be variable or fixed and range from 0-100 psi (= 0-6,9 bar) and up to 3 gallons per minute (GPM) (= 1,9 . 10⁻⁴ m³/s). The device can be tuned for a variety of incoming liquid pressure and flow conditions, e.g. beyond those described herein. The input signals provided to the electronic control logic subsystem 4 may contain information about the one or more incoming liquid pressure and flow conditions for programming and tuning the electronic control logic subsystem 4 for any particular application.

The Motor Driven Pump 1: The incoming liquid may be provided to the motor driven pump 1 in Figure 3 via rigid tubing or flexible tubing or hose and fittings used in standard beverage dispense applications and plumbing systems. The motor driven pump 1 functions to manipulate the flow and pressure characteristics of the incoming liquid stream based on electronic communication received from the electronic control logic subsystem or controller 4. The motor driven pump 1 can be any type of pump that is suitable for the liquid and performance desired. Example types may include pumps like Diaphragm, Gear, Lobe, Flexible Impeller, Vane, Centrifugal, etc. The motor driven pump 1 provides adjusted flow and pressure conditions to the pumped incoming liquid sensed by the liquid pressure sensing device 2 and provided to the carbjet 5 where the liquid is then mixed with gas.

The Liquid Pressure Sensing Device 2: The liquid pressure sensing device 2 functions to provide liquid pressure feedback in the form of an input signal to the Electronic Control Logic Subsystem 4. The liquid pressure sensing device 2 can be a separate device in line, or can be a device that is incorporated as an integral part of the motor driven pump 1, the gas pressure sensing device 3, the electronic control logic subsystem 4, and the carbjet 5 or other external system component. The liquid pressure sensing device 2 may be directly or indirectly sensing the pressure and communicating the feedback through various types of process signal communication values and methods. The fluid is then introduced into the Inline Liquid/Gas Absorption device 5.

The Inline Liquid/Gas Absorption device 5: The inline liquid/gas absorption device 5 in the inline gas infusion system 10 functions to mix the gas and liquid streams for an end result of infusing the gas into the liquid phase. The pressure and flow characteristics of the incoming streams determine the degree of absorption of gas into the liquid at a given temperature, pressure, and flow condition. The gas input is a regulated supply typically provided by Gas storage cylinders and other types of pressurized vessels via properly rated tubing or hose, and fittings, e.g., as shown in Figures 4-5. The gas may consist of one or more types of gas, premixed or fed separately into the carbjet 5. The incoming gas supply flows to the Gas Pressure Sensing Device 3 prior to entering the mixing chamber of the carbjet 5.

The Gas Pressure Sensing Device 3: The gas pressure sensing device 3 functions to provide gas pressure feedback in the form of the pressure input signals to the Electronic Control Logic Subsystem 4. The Gas Pressure Sensing Device 3 may be a separate device in line, or may be a device that is incorporated as an integral part of the motor driven pump 1, the liquid pressure sensing device 2, the Electronic Control Logic Subsystem 4, the carbjet 5, or other external system component. Item 3 may be directly or indirectly sensing the pressure and communicating the feedback through various types of process signal communication values and methods.

The Electronic Control Logic Subsystem 4: The electronic control logic subsystem 4 functions to receive input communication signaling from the liquid pressure sensing device 2 and the gas pressure sensing device 3, and or other sensors in the system and implement the control logic. The electronic control logic subsystem 4 provides output communication signaling as the output signals to the motor driven pump 1 for purposes of achieving and maintaining the differential pressure between the incoming liquid and gas feed streams for the end intent of maintaining or changing the set point target for Gas Absorption desired in the liquid output. The absorption level set point is achieved by monitoring and maintaining differential pressure between the Gas and Liquid streams at desired levels entering the carbjet 5 by varying the characteristics of the voltage signal output to the motor driven pump 1. The electronic control logic subsystem 4 may receive communication from other sensors of devices in the inline gas infusion system 10, and use the information to implement control action or output communication signaling to the motor driven pump 1, the liquid pressure sensing device 2, the gas pressure sensing device 3, and the carbjet 5, which are internal to the described system, as well as other internal or external components or devices such as valves, switches, relays, displays, lights, etc. as needed to support auxiliary functions and other system operational objectives. As one skilled in the art would appreciate, suitable control signaling may be implemented between the electronic control logic subsystem 4 and the motor driven pump 1, the liquid pressure sensing device 2, the gas pressure sensing device 3, and the carbjet 5 to implement control action or output communication signaling, e.g., via hardwiring control lines, as well as other techniques known in the art, such as wireless communications. The electronic control logic subsystem 4 may include both electronic hardware components and software program(s), parameters, variables, and logic that are needed to execute the control algorithm and support the operation of the system.

### Figure 4

Figure 4 shows an example of a first application generally indicated as 20 having the inline gas liquid infusion system shown in Figure 3 with an adjustable output, self-tuning application, and also having a single dispenser valve, e.g., for dispensing a nitrogen and/or CO₂ infused coffee, tea, latte, or other drinks, according to some embodiments of the present invention.

As shown in Figures 3-4, the motor driven pump 1 may receive the incoming liquid pressure (Fig. 3) from a cold brewed coffee pressurized keg K (Fig. 4) that may receive pressurized gas (e.g., CO₂ and/or nitrogen) from a pressured gas tank T1, as shown. The pressured gas tank T1 may include a gas regulator R1 for pressurizing the liquid vessel or keg K (e.g., about 16 PSI = 1,1 bar).

As shown in Figures 3-4, the carbjet 5 receives pressured gas from a pressurized gas tank T2 having CO₂ or nitrogen gas. The pressurized gas tank T2 may include a gas regulator R2 for providing a gas regulator pressurizing inline absorber device gas input (e.g., about 40 PSI = 2,76 bar), e.g., for regulating the pressure of the gas provided to the carbjet 5.

As shown in Figures 3-4, the carbjet 5 provides the gas infused liquid (Fig. 3) to a dispensing valve DV shown in Figure 4, e.g., for dispensing the nitrogen and/or CO₂ infused coffee, tea, latte, or other drinks or beverage B. Advantages of this application, e.g., include adjustable nitrogen level outputs, self-tuning variations in the system conditions, and the ability to maintain accuracy and performance with variable input pressures.

### Figure 5

Figure 5 shows an example of a second application generally indicated as 30 having the inline gas liquid infusion system shown in Figures 3 and 4 with an adjustable output, self-tuning application, and also having a single or multiple dispenser valve, e.g., for dispensing a water carbonation to/for beverages like soda, according to some embodiments of the present invention.

As shown in Figures 3-5, the motor driven pump 1 may receive the incoming liquid pressure (Fig. 3) from a commercial incoming water pressure fixture F (Fig. 4, as shown. The pressured gas tank T1 may include a gas regulator R1 for pressurizing the liquid vessel or keg K (e.g., about 16 PSI = 1,1 bar).

As shown in Figures 3-5, the carbjet 5 receives pressured gas from a pressurized gas tank T2 having CO₂ or nitrogen gas. The pressurized gas tank T2 may include a gas regulator R2 for providing a gas regulator pressurizing inline absorber device gas input (e.g., about 0 to 100 PSI = 0 to 6,9 bar), e.g., for regulating the pressure of the gas provided to the carbjet 5. As shown in Figures 3-5, the carbjet 5 provides the gas infused liquid (Fig. 3) to a dispensing valve D shown in Figure 5, e.g., for dispensing the nitrogen and/or CO₂ infused syrup-based drinks or beverage. The dispenser D receives the syrup/concentrate, e.g., from a combination of a bag-in-box syrup pump 32, a bag-in- box beverage concentrate container 34 and a pressured gas tank T1, as shown. The pressured gas tank T1 may include a gas regulator R1 for pressurizing gas (e.g. typically 65 PSI = 4,5 bar) to the bag-in-box syrup pump 32 for driving the same. The bag-in- box beverage concentrate container 34 contain the syrup/concentrate being pumped to the dispenser D.

### Figure 6:

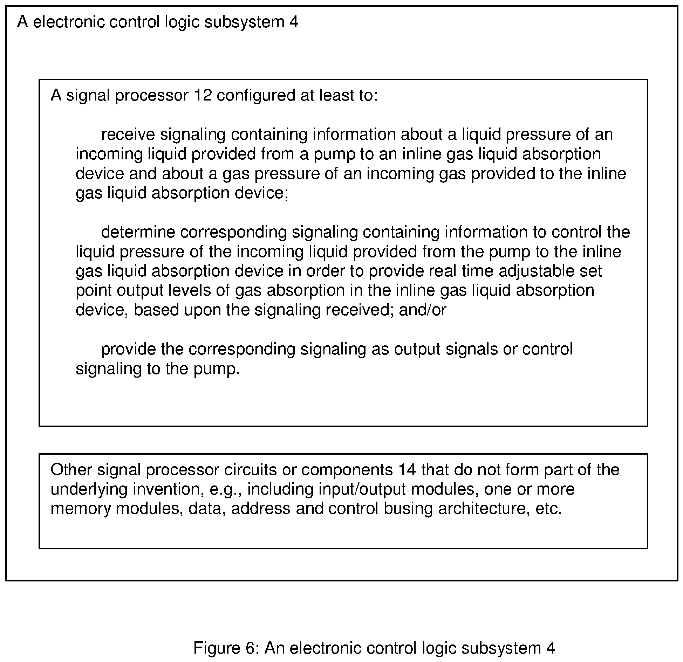

By way of example, Figure 6 shows an electronic control logic subsystem generally indicated as 4, e.g. having at least one signal processor or signal processor or processing module 12 (hereinafter "signal processor") for implementing the signal processing functionality according to some embodiments of the present invention. In operation, the signal processor 12 may be configured to:
receive signaling containing information about a liquid pressure of an incoming liquid provided from a pump to an inline gas liquid absorption device and about a gas pressure of an incoming gas provided to the inline gas liquid absorption device; and
determine corresponding signaling containing information to control the liquid pressure of the incoming liquid provided from the pump to the inline gas liquid absorption device in order to provide real time adjustable set point output levels of gas absorption in the inline gas liquid absorption device, based upon the signaling received.

By way of further example, the signal processor may be configured to provide the corresponding signaling as output signals or control signaling to control the pump.

The functionality of the signal processor 12 may be implemented using hardware, software, firmware, or a combination thereof. In a typical software implementation, the processor module may include one or more microprocessor- based architectures having a microprocessor, a random access memory (RAM), a read only memory (ROM), input/output devices and control, data and address buses connecting the same, e.g., consistent with that shown in Figure 3, e.g., see element 14. A person skilled in the art would be able to program such a microprocessor- based architecture(s) to perform and implement such signal processing functionality described herein without undue experimentation. The scope of the invention is not intended to be limited to any particular implementation using any such microprocessor-based architecture or technology either now known or later developed in the future.

By way of example, the electronic control logic subsystem 4 may also include, e.g., other signal processor circuits or components 14 that do not form part of the underlying invention, e.g., including input/output modules, one or more memory modules, data, address and control busing architecture, etc. In operation, the signal processor 12 may cooperation and exchange suitable data, address and control signaling with the other signal processor circuits or components 14 in order to implement the signal processing functionality according to the present invention. By way of example, the signaling may be received by such an input module, provided along such a data bus and stored in such a memory module for later processing, e.g., by the signal processor 12. After such later processing, processed signaling resulting from any such determination may be stored in such a memory module, provided from such a memory module along such a data bus to such an output module, then provided from such an output module as the primary control C, e.g., by the at least one signal processor 12.

### Possible Applications:

The possible applications may include the following:
Infusing CO₂ or other Gases such as Nitrogen into liquids for beverages Water, Soda, Beer, Coffee, Tea, Milk and Yogurt Based (See Figures 3 and 4), and/or Infusing CO₂ or other Gases such as Nitrogen into liquids for increasing the effectiveness of cleaning, sanitizing, etc. for example General Surface Cleaning, Soil extraction, Beverage Line Cleaning, Water Purification.

## Claims

1. An inline gas/liquid infusion system (10) comprising:
an inline gas liquid absorption device (5), and
a pump (1) for providing incoming liquid to the inline gas liquid absorption device (5),
a liquid pressure sensing device (2) configured to sense a liquid pressure of the incoming liquid,
a gas pressure sensing device (3) configured to sense a gas pressure of an incoming gas provided to the inline gas liquid absorption device (5), and
an electronic control logic subsystem (4) having a signal processor (12) configured to:
receive from the liquid pressure sensing device (2) signaling containing information about a liquid pressure of the incoming liquid provided from the pump (1) to the inline gas liquid absorption device (5);
receive from the gas pressure sensing device (3) signaling containing information about a gas pressure of the incoming gas provided to the inline gas liquid absorption device (5);
determine corresponding signaling containing information to control the liquid pressure of the incoming liquid provided from the pump (1) to the inline gas liquid absorption device (5), based upon the signaling received from the liquid pressure sensing device (2) and from the gas pressure sensing device (3); and
control the pump (1) based on the determined corresponding signaling in order to provide real time adjustable set point output levels of gas absorption in the inline gas liquid absorption device (5),
wherein the signaling received contains information about the liquid pressure sensed and the gas pressure sensed; and
the signal processor (12) is configured to determine the real time adjustable set point output levels of the gas absorption by monitoring the signaling received and adjusting the liquid pressure of the incoming liquid provided from the pump (1) to the inline gas liquid absorption device (5) based upon a differential pressure between the liquid pressure sensed and the gas pressure sensed.

2. An inline gas/liquid infusion system (10) according to claim 1, wherein the signal processor (12) is configured to provide the corresponding signaling as output signals to the pump (1) to adjust the liquid pressure of the incoming liquid provided from the pump (1) to the inline gas liquid absorption device (5), preferably by varying characteristics of a voltage signal output to the pump (1).

3. An inline gas/liquid infusion system (10) according to one of the preceding claims, wherein the inline gas/liquid infusion system (10) comprises the pump (1) configured to:
receive the corresponding signaling provided as output signaling from the signal processor (12), and also receive the incoming liquid; and
pump the incoming liquid, based upon the output signaling received.

4. An inline gas/liquid infusion system (10) according to one of the preceding claims, wherein the pump is a motor driven pump (1)

5. An inline gas/liquid infusion system (10) according to one of the preceding claims, wherein the inline gas/liquid infusion system (10) comprises the inline gas liquid absorption device (5) configured to:
receive the liquid pressure of the incoming liquid provided from the pump (1), and the gas pressure of the incoming gas provided from a pressurized gas tank (T2), and
provide a gas infused liquid, including providing the gas infused liquid to a dispenser system or valve (DV; D).

6. An inline gas/liquid infusion system (10) according to one of the preceding claims, wherein the signaling includes liquid pressure input signals (P2) received from the liquid pressure sensing device (2) configured to sense the liquid pressure of the incoming liquid provided from the pump (1), and to provide the liquid pressure input signals (P2) containing information about the liquid pressure of the incoming liquid provided from the pump (1).

7. An inline gas/liquid infusion system (10) according to one of the preceding claims, wherein the signaling includes gas pressure input signals (P1) received from the gas pressure sensing device (3) configured to sense the gas pressure of the incoming gas provided from a pressurized gas tank (T2) to the inline gas liquid absorption device (5), and provide gas pressure input signals containing information about the gas pressure of the incoming gas provided from the pressurized gas tank (T2) to the inline gas liquid absorption device (5).

8. An inline gas/liquid infusion system (10) according to claim 7, wherein the pressurized gas tank (T2) is configured to provide CO₂ or nitrogen, or both.

9. An inline gas/liquid infusion system (10) according to one of the preceding claims, wherein the inline gas liquid absorption device (5) includes, or takes the form of, a mixing valve, a carbonator, a nitrogenator or an infuser.

10. An inline gas/liquid infusion system (10) according to one of the preceding claims, wherein the pump (1) includes, or takes the form of, a diaphragm, gear, lobe, flexible impeller, vane or centrifugal pump.

11. An inline gas/liquid infusion system (10) according to one of the preceding claims, wherein the corresponding signaling controls the pump (1) so as to provide adjusted flow and pressure conditions of the incoming liquid provided to the inline gas liquid absorption device (5).

12. An inline gas/liquid infusion system (10) according to one of the preceding claims, wherein the signaling includes at least one feedback signal that contains the information about the liquid pressure of the incoming liquid provided from the pump (1) to the inline gas liquid absorption device (5).

13. A method for an inline gas/liquid infusion in an inline gas/liquid infusion system (10), comprising:
receiving, with a signal processor (12), signaling containing information about a liquid pressure of an incoming liquid provided from a pump (1) of the inline gas/liquid infusion system (10) to an inline gas liquid absorption device (5) of the inline gas/liquid infusion system (10);
receiving, with a signal processor (12), signaling containing information about a gas pressure of an incoming gas provided to the inline gas liquid absorption device (5);
determining, with the signal processor (12), corresponding signaling containing information to control the liquid pressure of the incoming liquid provided from the pump (1) to the inline gas liquid absorption device (5), based upon the signaling received; and
controlling the pump (1) based on the determined corresponding signaling in order to provide real time adjustable set point output levels of gas absorption in the inline gas liquid absorption device (5),
wherein the signaling containing information about the liquid pressure and the signaling containing information about the gas pressure are sensed by means of pressure sensing devices (2, 3) of the inline gas/liquid infusion system (10); and
the method further comprises determining, with the signal processor (12), the real time adjustable set point output levels of the gas absorption by monitoring the signaling received and adjusting the liquid pressure of the incoming liquid provided from the pump (1) to the inline gas liquid absorption device (5) based upon a differential pressure between the liquid pressure sensed and the gas pressure sensed.

14. A method according to claim 13, wherein the method further comprises providing, with the signal processor (12), the corresponding signaling as output signals to the pump (1) to adjust the liquid pressure of the incoming liquid provided from the pump (1) to the inline gas liquid absorption device (5), including by varying characteristics of a voltage signal output to the pump (1).

## Patentansprüche

1. Inline-Gas/Flüssigkeits-Infusionssystem (10), umfassend:
eine Inline-Gas-Flüssigkeits-Absorptionsvorrichtung (5), und
eine Pumpe (1) zum Zuführen von ankommender Flüssigkeit zu der Inline-Gas-Flüssigkeits-Absorptionsvorrichtung (5),
eine Flüssigkeitsdruck-Erfassungsvorrichtung (2), die ausgebildet ist, einen Flüssigkeitsdruck der ankommenden Flüssigkeit zu erfassen,
eine Gasdruck-Erfassungsvorrichtung (3), die ausgebildet ist, einen Gasdruck eines ankommenden Gases zu erfassen, das der Inline-Gas-Flüssigkeits-Absorptionsvorrichtung (5) zugeführt wird, und
ein elektronisches Steuerlogik-Subsystem (4) mit einem Signalprozessor (12), der ausgebildet ist:
von der Flüssigkeitsdruck-Erfassungsvorrichtung (2) eine Signalisierung zu empfangen, die Informationen über einen Flüssigkeitsdruck der ankommenden Flüssigkeit enthält, die der Inline-Gas-Flüssigkeits-Absorptionsvorrichtung (5) von der Pumpe (1) zugeführt wird;
von der Gasdruck-Erfassungsvorrichtung (3) eine Signalisierung zu empfangen, die Informationen über einen Gasdruck des ankommenden Gases enthält, das der Inline-Gas-Flüssigkeits-Absorptionsvorrichtung (5) zugeführt wird;
eine entsprechende Signalisierung zu ermitteln, die Informationen enthalten, um den Flüssigkeitsdruck der ankommenden Flüssigkeit zu steuern, die der Inline-Gas-Flüssigkeits-Absorptionsvorrichtung (5) von der Pumpe (1) zugeführt wird, basierend auf der Signalisierung, die von der Flüssigkeitsdruck-Erfassungsvorrichtung (2) und von der Gasdruck-Erfassungsvorrichtung (3) empfangen wird; und
die Pumpe (1) zu steuern, basierend auf der ermittelten entsprechenden Signalisierung, um in Echtzeit einstellbare Sollwert-Ausgangspegel der Gasabsorption in der Inline-Gas-Flüssigkeits-Absorptionsvorrichtung (5) bereitzustellen,
wobei die empfangene Signalisierung Informationen über den erfassten Flüssigkeitsdruck und den erfassten Gasdruck enthält; und
der Signalprozessor (12) ausgebildet ist, die in Echtzeit einstellbaren Sollwert-Ausgangspegel der Gasabsorption durch Überwachen der empfangenen Signalisierung und Einstellen des Flüssigkeitsdrucks der ankommenden Flüssigkeit, die der Inline-Gas-Flüssigkeits-Absorptionsvorrichtung (5) von der Pumpe (1) zugeführt wird, basierend auf einem Differenzdruck zwischen dem erfassten Flüssigkeitsdruck und dem erfassten Gasdruck zu ermitteln.

2. Inline-Gas/Flüssigkeits-Infusionssystem (10) nach Anspruch 1, wobei der Signalprozessor (12) ausgebildet ist, die entsprechende Signalisierung als Ausgangssignale an die Pumpe (1) bereitzustellen, um den Flüssigkeitsdruck der ankommenden Flüssigkeit, die der Inline-Gas/Flüssigkeits-Absorptionsvorrichtung (5) von der Pumpe (1) zugeführt wird, einzustellen, vorzugsweise durch Variieren der Eigenschaften eines Spannungs-Ausgangssignals, das an die Pumpe (1) ausgegeben wird.

3. Inline-Gas/Flüssigkeits-Infusionssystem (10) nach einem der vorhergehenden Ansprüche, wobei das Inline-Gas/Flüssigkeits-Infusionssystem (10) die Pumpe (1) umfasst, die ausgebildet ist:
die entsprechende Signalisierung zu empfangen, die von dem Signalprozessor (12) als Ausgangssignalisierung bereitgestellt wird, und auch die ankommende Flüssigkeit zu empfangen; und
die ankommende Flüssigkeit zu pumpen, basierend auf der empfangenen Ausgangssignalisierung.

4. Inline-Gas/Flüssigkeits-Infusionssystem (10) nach einem der vorhergehenden Ansprüche, wobei die Pumpe eine motorgetriebene Pumpe (1) ist.

5. Inline-Gas/Flüssigkeits-Infusionssystem (10) nach einem der vorhergehenden Ansprüche, wobei das Inline-Gas/Flüssigkeits-Infusionssystem (10) die Inline-Gas-Flüssigkeits-Absorptionsvorrichtung (5) umfasst, die ausgebildet ist:
den Flüssigkeitsdruck der ankommenden Flüssigkeit, die von der Pumpe (1) bereitgestellt wird, und den Gasdruck des ankommenden Gases, das von einem unter Druck stehenden Gastank (T2) bereitgestellt wird, zu empfangen und
eine mit Gas versetzte Flüssigkeit bereitzustellen, einschließlich der Bereitstellung der mit Gas versetzten Flüssigkeit an ein Spendersystem oder Ventil (DV; D).

6. Inline-Gas/Flüssigkeits-Infusionssystem (10) nach einem der vorhergehenden Ansprüche, wobei die Signalisierung Flüssigkeitsdruck-Eingangssignale (P2) enthält, die von der Flüssigkeitsdruck-Erfassungsvorrichtung (2) empfangen werden, die ausgebildet ist, den Flüssigkeitsdruck der von der Pumpe (1) bereitgestellten ankommenden Flüssigkeit zu erfassen und die Flüssigkeitsdruck-Eingangssignale (P2) bereitstellt, die Informationen über den Flüssigkeitsdruck der von der Pumpe (1) bereitgestellten ankommenden Flüssigkeit enthalten.

7. Inline-Gas/Flüssigkeits-Infusionssystem (10) nach einem der vorhergehenden Ansprüche, wobei die Signalisierung Gasdruck-Eingangssignale (P1) enthält, die von der Gasdruck-Erfassungsvorrichtung (3) empfangen werden, die ausgebildet ist, den Gasdruck des ankommenden Gases zu erfassen, das der Inline-Gas-Flüssigkeits-Absorptionsvorrichtung (5) von einem unter Druck stehenden Gastank (T2) bereitgestellt wird, und Gasdruck-Eingangssignale zu liefern, die Informationen über den Gasdruck des ankommenden Gases enthalten, das der Inline-Gas-Flüssigkeits-Absorptionsvorrichtung (5) von dem unter Druck stehenden Gastank (T2) bereitgestellt wird.

8. Inline-Gas/Flüssigkeits-Infusionssystem (10) nach Anspruch 7, wobei der unter Druck stehende Gastank (T2) ausgebildet ist, CO₂ oder Stickstoff oder beides bereitzustellen.

9. Inline-Gas/Flüssigkeits-Infusionssystem (10) nach einem der vorhergehenden Ansprüche, wobei die Inline-Gas-Flüssigkeits-Absorptionsvorrichtung (5) ein Mischventil, einen Karbonator, einen Nitrogenator oder einen Infusor umfasst oder als solches/solcher ausgebildet ist.

10. Inline-Gas/Flüssigkeits-Infusionssystem (10) nach einem der vorhergehenden Ansprüche, wobei die Pumpe (1) eine Membran-, Zahnrad-, Drehkolben-, flexible Impeller-, Flügelrad- oder Zentrifugalpumpe umfasst oder als solche ausgebildet ist.

11. Inline-Gas/Flüssigkeits-Infusionssystem (10) nach einem der vorhergehenden Ansprüche, wobei die entsprechende Signalisierung die Pumpe (1) steuert, um eingestellte Fluss- und Druckbedingungen der ankommenden Flüssigkeit bereitzustellen, die der Inline-Gas-Flüssigkeits-Absorptionsvorrichtung (5) zugeführt wird.

12. Inline-Gas/Flüssigkeits-Infusionssystem (10) nach einem der vorhergehenden Ansprüche, wobei die Signalisierung mindestens ein Rückkopplungssignal umfasst, das die Information über den Flüssigkeitsdruck der ankommenden Flüssigkeit enthält, die der Inline-Gas-Flüssigkeits-Absorptionsvorrichtung (5) von der Pumpe (1) zugeführt wird.

13. Verfahren für eine Inline-Gas/Flüssigkeits-Infusion in einem Inline-Gas/Flüssigkeits-Infusionssystem (10), umfassend:
mit einem Signalprozessor (12), Empfangen einer Signalisierung, die Informationen über einen Flüssigkeitsdruck einer ankommenden Flüssigkeit enthält, die einer Inline-Gas/Flüssigkeits-Absorptionsvorrichtung (5) des Inline-Gas/Flüssigkeits-Infusionssystems (10) von einer Pumpe (1) des Inline-Gas/Flüssigkeits-Infusionssystems (10) zugeführt wird;
mit einem Signalprozessor (12), Empfangen einer Signalisierung, die Informationen über einen Gasdruck eines ankommenden Gases enthält, das der Inline-Gas-Flüssigkeits-Absorptionsvorrichtung (5) zugeführt wird;
mit dem Signalprozessor (12), Ermitteln einer entsprechenden Signalisierung, die Informationen enthält, um den Flüssigkeitsdruck der ankommenden Flüssigkeit zu steuern, die der Inline-Gas-Flüssigkeits-Absorptionsvorrichtung (5) von der Pumpe (1) zugeführt wird, basierend auf der empfangenen Signalisierung; und
Steuern der Pumpe (1) basierend auf der der ermittelten entsprechenden Signalisierung, um in Echtzeit einstellbare Sollwert-Ausgangspegel der Gasabsorption in der Inline-Gas-Flüssigkeits-Absorptionsvorrichtung (5) bereitzustellen,
wobei die Signalisierung umfassend Informationen über den Flüssigkeitsdruck und die Signalisierung umfassend Informationen über den Gasdruck mittels Druckmessvorrichtungen (2, 3) des Inline-Gas/Flüssigkeits-Infusionssystems (10) erfasst werden; und
das Verfahren ferner mit dem Signalprozessor (12) das Bestimmen der in Echtzeit einstellbaren Sollwert-Ausgangspegel der Gasabsorption durch Überwachen der empfangenen Signalisierung und Einstellen des Flüssigkeitsdrucks der ankommenden Flüssigkeit, die der Inline-Gas-Flüssigkeitsabsorptionsvorrichtung (5) von der Pumpe (1) zugeführt wird, basierend auf einem Differenzdruck zwischen dem erfassten Flüssigkeitsdruck und dem erfassten Gasdruck umfasst.

14. Verfahren nach Anspruch 13, wobei das Verfahren ferner mit dem Signalprozessor (12) das Bereitstellen der entsprechenden Signalisierung als Ausgangssignale an die Pumpe (1) umfasst, um den Flüssigkeitsdruck der ankommenden Flüssigkeit, die der Inline-Gas-Flüssigkeits-Absorptionsvorrichtung (5) von der Pumpe (1) bereitgestellt wird, einzustellen, einschließlich durch Variieren der Eigenschaften eines Spannungs-Ausgangssignals, das an die Pumpe (1) ausgegeben wird.

## Revendications

1. Système de perfusion de gaz/liquide en ligne (10) comprenant :
un dispositif d'absorption gaz/liquide en ligne (5), et
une pompe (1) pour fournir un liquide entrant au dispositif d'absorption gaz/liquide en ligne (5),
un dispositif de détection de pression de liquide (2) configuré pour détecter une pression de liquide du liquide entrant,
un dispositif de détection de pression de gaz (3) configuré pour détecter une pression de gaz d'un gaz entrant fourni au dispositif d'absorption gaz/liquide en ligne (5), et
un sous-système logique de commande électronique (4) ayant un processeur de signaux (12) configuré pour:
recevoir du dispositif de détection de pression de liquide (2) une signalisation contenant des informations sur une pression de liquide du liquide entrant fourni par la pompe (1) au dispositif d'absorption gaz/liquide en ligne (5);
recevoir du dispositif de détection de pression de gaz (3) une signalisation contenant des informations sur une pression de gaz du gaz entrant fourni au dispositif d'absorption gaz/liquide en ligne (5);
déterminer une signalisation correspondante contenant des informations pour contrôler la pression de liquide du liquide entrant fourni par la pompe (1) au dispositif d'absorption gaz/liquide en ligne (5), sur la base de la signalisation reçue du dispositif de détection de pression de liquide (2) et du dispositif de détection de pression de gaz (3); et
commander la pompe (1) sur la base de la signalisation correspondante déterminée afin de fournir des niveaux de sortie de point de consigne ajustables en temps réel d'absorption de gaz dans le dispositif d'absorption gaz/liquide en ligne (5),
dans lequel la signalisation reçue contient des informations sur la pression du liquide détectée et la pression du gaz détectée; et
le processeur de signaux (12) est configuré pour déterminer les niveaux de sortie de point de consigne ajustables en temps réel de l'absorption de gaz en surveillant la signalisation reçue et en ajustant la pression de liquide du liquide entrant fourni par la pompe (1) au dispositif d'absorption gaz/liquide en ligne (5) sur la base d'une pression différentielle entre la pression de liquide détectée et la pression de gaz détectée.

2. Système de perfusion de gaz/liquide en ligne (10) selon la revendication 1, dans lequel le processeur de signaux (12) est configuré pour fournir la signalisation correspondante en tant que signaux de sortie à la pompe (1) pour ajuster la pression de liquide du liquide entrant fourni par la pompe (1) au dispositif d'absorption gaz/liquide en ligne (5), de préférence en faisant varier les caractéristiques d'un signal de tension fourni à la pompe (1).

3. Système de perfusion gaz/liquide en ligne (10) selon l'une des revendications précédentes, dans lequel le système de perfusion gaz/liquide en ligne (10) comprend la pompe (1) configurée pour :
recevoir la signalisation correspondante fournie en tant que une signalisation de sortie par le processeur de signaux (12), et recevoir également le liquide entrant; et
pomper le liquide entrant, sur la base de la signalisation de sortie reçu.

4. Système de perfusion gaz/liquide en ligne (10) selon l'une des revendications précédentes, dans lequel la pompe est une pompe motorisée (1).

5. Système de perfusion gaz/liquide en ligne (10) selon l'une des revendications précédentes, dans lequel le système de perfusion gaz/liquide en ligne (10) comprend le dispositif d'absorption gaz/liquide en ligne (5) configuré pour:
recevoir la pression de liquide du liquide entrant fourni par la pompe (1), et la pression de gaz du gaz entrant fourni par un réservoir de gaz sous pression (T2), et
fournir un liquide infusé de gaz, y compris fournir le liquide infusé de gaz à un système ou une vanne de distribution (DV ; D).

6. Système de perfusion gaz/liquide en ligne (10) selon l'une des revendications précédentes, dans lequel la signalisation comprend des signaux d'entrée de pression de liquide (P2) reçus du dispositif de détection de pression de liquide (2) configuré pour détecter la pression de liquide du liquide entrant fourni par la pompe (1), et pour fournir les signaux d'entrée de pression de liquide (P2) contenant des informations sur la pression de liquide du liquide entrant fourni par la pompe (1).

7. Système de perfusion de gaz/liquide en ligne (10) selon l'une des revendications précédentes, dans lequel la signalisation comprend des signaux d'entrée de pression de gaz (P1) reçus du dispositif de détection de pression de gaz (3) configuré pour détecter la pression de gaz du gaz entrant fourni par un réservoir de gaz sous pression (T2) au dispositif d'absorption gaz/liquide en ligne (5), et fournir des signaux d'entrée de pression de gaz contenant des informations sur la pression de gaz du gaz entrant fourni par le réservoir de gaz sous pression (T2) au dispositif d'absorption gaz/liquide en ligne (5).

8. Système de perfusion gaz/liquide en ligne (10) selon la revendication 7, dans lequel le réservoir de gaz sous pression (T2) est configuré pour fournir du CO₂ ou de l'azote, ou les deux.

9. Système d'infusion gaz/liquide en ligne (10) selon l'une des revendications précédentes, dans lequel le dispositif d'absorption gaz/liquide en ligne (5) comprend, ou prend la forme, d'une vanne de mélange, d'un carbonateur, d'un nitrogénateur ou d'un infuseur.

10. Système de perfusion gaz/liquide en ligne (10) selon l'une des revendications précédentes, dans lequel la pompe (1) comprend, ou prend la forme, d'une pompe à membrane, à engrenage, à lobes, à roue flexible, à palettes ou centrifuge.

11. Système de perfusion gaz/liquide en ligne (10) selon l'une des revendications précédentes, dans lequel la signalisation correspondante commande la pompe (1) de manière à fournir des conditions de débit et de pression ajustées du liquide entrant fourni au dispositif d'absorption gaz/liquide en ligne (5).

12. Système de perfusion gaz/liquide en ligne (10) selon l'une des revendications précédentes, dans lequel la signalisation comprend au moins un signal de retour qui contient l'information sur la pression du liquide entrant fourni par la pompe (1) au dispositif d'absorption gaz/liquide en ligne (5).

13. Procédé pour une perfusion gaz/liquide en ligne dans un système de perfusion gaz/liquide en ligne (10), comprenant :
recevoir, avec un processeur de signaux (12), une signalisation contenant des informations sur une pression de liquide d'un liquide entrant fourni par une pompe (1) du système de perfusion de gaz/liquide en ligne (10) à un dispositif d'absorption gaz/liquide en ligne (5) du système de perfusion de gaz/liquide en ligne (10) ;
recevoir, avec un processeur de signaux (12), une signalisation contenant des informations sur une pression de gaz d'un gaz entrant fourni au dispositif d'absorption gaz/liquide en ligne (5);
déterminer, avec le processeur de signaux (12), une signalisation correspondante contenant des informations pour contrôler la pression de liquide du liquide entrant fourni par la pompe (1) au dispositif d'absorption gaz/liquide en ligne (5), sur la base de la signalisation reçue; et
commander la pompe (1) sur la base de la signalisation correspondante déterminée afin de fournir des niveaux de sortie de point de consigne ajustables en temps réel d'absorption de gaz dans le dispositif d'absorption gaz/liquide en ligne (5),
dans lequel la signalisation contenant des informations sur la pression du liquide et la signalisation contenant des informations sur la pression du gaz sont détectées au moyen de dispositifs de détection de pression (2, 3) du système de perfusion de gaz/liquide en ligne (10) ; et
le procédé comprend en outre la détermination, avec le processeur de signaux (12), des niveaux de sortie de point de consigne ajustables en temps réel de l'absorption de gaz en surveillant la signalisation reçue et en ajustant la pression de liquide du liquide entrant fourni par la pompe (1) au dispositif d'absorption gaz/liquide en ligne (5) sur la base d'une pression différentielle entre la pression de liquide détectée et la pression de gaz détectée.

14. Procédé selon la revendication 13, dans lequel le procédé comprend en outre la fourniture, avec le processeur de signaux (12), de la signalisation correspondante en tant que signaux de sortie à la pompe (1) pour ajuster la pression de liquide du liquide entrant fourni par la pompe (1) au dispositif d'absorption gaz/liquide en ligne (5), y compris en faisant varier les caractéristiques d'un signal de tension fourni à la pompe (1).
